# EUROPEAN PATENT APPLICATION

(11) **EP 4 468 049 A1**
(43) Date of publication of application: **27.11.2024**
(21) Application number: 24176820.9
(22) Date of filing: 20.05.2024
(51) Int. Cl.: G02B 6/44

(54) **OPTICAL FIBER CABLE WITH PLURALITY OF SLOTS**

(30) Priority: 25.05.2023 IN 202311036159
(71) Applicant: Sterlite Technologies Limited, Gurugram, Haryana 122102 (IN)
(72) Inventor: SINGH, Sourabh, 122102 Haryana (IN); SACHAN, Shubham, 122102 Haryana (IN)
(74) Representative: Sach, Greg Robert

(57) **Abstract**

The present disclosure relates to an optical fiber cable (100, 200, 300, 400) comprising a plurality of optical fibers (102), a deformable skeleton structure (104), and a sheath (106) surrounding the plurality of optical fibers (102) and the deformable skeleton structure (104). In particular, the sheath (106) and the deformable skeleton structure (104) forms a plurality of slots (108) such that one or more optical fibers of the plurality of optical fibers (102) are positioned inside one or more slots of the plurality of slots (108).

## Description

### TECHNICAL FIELD

Embodiments of the present disclosure relate to the field of telecommunication fiber, and more particularly, relates to an optical fiber cable with a plurality of slots.
This application claims the benefit of Indian Application No. "202311036159" titled "OPTICAL FIBER CABLE WITH PLURALITY OF SLOTS" filed by the applicant on May 25, 2023, which is incorporated herein by reference in its entirety.

### Background Art

Optical fibers are widely used to transmit information or data in the form of light from one place to another. The optical fibers are disposed within the optical fiber cable. Fiber optic cables include one or more optical fibers or other optical waveguides that conduct optical signals, for example carrying voice, data, video, or other information. In a typical cable arrangement, optical fibers are placed in a tubular assembly. A tube may be disposed inside an outer jacket or may form the outer jacket. In either case, the tube typically provides at least some level of protection for the fibers contained therein.

Water penetration through the cable core can cause mechanical and/or optical degradation in optical fibers. Conventionally water swellable yarns (WSYs) are placed inside an optical fiber cable along with one or more optical fibers and additionally a water blocking tape (WBT) is wrapped around a core of the optical fiber cable. However, due to uneven distribution of water blocking elements, the optical fiber cable often fails. Similarly, for an optical fiber cable with requirement on fire retardancy, one or more fire retardant components are not distributed uniformly in conventional optical fiber cables.

Partially bonded ribbons have been used in fiber optic cables designed for indoor premises installation and for outdoor duct and direct bury installation. While such existing cables are useful for their intended purpose, they have limited environmental and mechanical ratings compared to other rugged tight buffer fiber optic cable designs for direct deployment and retrieval ground tactical application.

Prior art reference US10983294B2 discloses a cable core with conventional solid slot and buffer tubes with fibers positioned in each slot.

Prior art reference US10983294B2 further discloses a water blocking tape (WBT) wrapped around the slot.

Yet another prior art reference WO2023282284A1 discloses a conventional solid slot and a WBT in each slot over a bundle of optical fibers.

Yet another prior art reference JP2022013026A discloses about a conventional solid slot having a strength member embedded at centre and having optical fiber ribbons and cushioning material placed in slots.

The existing optical fiber cables face challenges related to uneven distribution of water-blocking elements and fire-retardant components. Water penetration, causing mechanical and optical degradation, is not uniformly prevented, and fire-retardancy is inconsistently distributed in conventional cables.

The cited prior art references, such as "US10983294B2," "WO2023282284A1," and "JP2022013026A," propose to use conventional slot and a surrounding water blocking tape but fail to provide uniform distribution of water blocking components inside the cable core.

Current optical fiber cables, despite incorporating water swellable yarns (WSYs) and water-blocking tapes (WBTs), often fail due to uneven distribution of these elements. Conventional designs lack uniformity in fire-retardant material placement. These shortcomings necessitate an improved optical fiber cable design.

Accordingly, to overcome the disadvantages of the prior art, there is an urgent need for a technical solution that overcomes the above-stated limitations in the prior arts. Thus, the present disclosure proposes an optical fiber cable with an optical fiber cable with a plurality of slots with uniform distribution of water absorption and/or fire retardancy properties of components inside the optical fiber cable.

### SUMMARY OF THE DISCLOSURE

Embodiments of the present disclosure relates to an optical fiber cable comprising a plurality of optical fibers, a deformable skeleton structure, a sheath that surrounds the plurality of optical fibers and the deformable skeleton structure such that the sheath and the deformable skeleton structure forms a plurality of slots. Particularly one or more optical fibers of the plurality of optical fibers are positioned inside one or more slots of the plurality of slots.

According to the first aspect of the present disclosure, the deformable skeleton structure is made up of a non-woven fabric. The deformable skeleton structure comprises anyone of, water swellable material, fire retardant material, or a combination thereof. Further, the deformable skeleton structure when exposed to water, has a swelling height of greater than 5 mm.

According to the second aspect of the present disclosure, each slot of the plurality of slots comprises one or more water swellable yarns (WSYs) along with the one or more optical fibers of the plurality of optical fiber.

According to the third aspect of the present disclosure, the deformable skeleton structure has a bending stiffness of less than 50 Millinewton Meter (mNm).

According to the fourth aspect of the present disclosure, the non-woven fabric has a thickness that is in a range of 0.1 millimetre (mm) to 0.5 (mm).

According to the fifth aspect of the present disclosure, the plurality of slots comprising 3 to 10 slots. And, where each slot of the plurality of slots has a different colour.

According to the sixth aspect of the present disclosure, the plurality of optical fibers are in the form of one or more bunches of a plurality of optical fiber ribbons.

According to the seventh aspect of the present disclosure, the plurality of optical fiber ribbons are intermittently bonded ribbons (IBRs).

According to the eighth aspect of the present disclosure, the plurality of optical fiber ribbons (304) in the one or more slots of the plurality of slots are bound by one of, a binder yarn, a binder tape, a WSY, a WBT, a Fire-retardant tape.

According to the ninth aspect of the present disclosure, the optical fiber cable further comprises one or more strength members embedded in the sheath.

The foregoing objectives of the present disclosure are attained by providing an optical fiber cable with a plurality of slots.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is a pictorial snapshot illustrating a cross sectional view of an optical fiber cable in accordance with an embodiment of the present disclosure;
Fig. 2 is a pictorial snapshot illustrating a cross sectional view of an optical fiber cable in accordance with an embodiment of the present disclosure;
Fig. 3 is a pictorial snapshot illustrating a cross sectional view of an optical fiber cable in accordance with another embodiment of the present disclosure;
Fig.4 is a pictorial snapshot illustrating a cross sectional view of an optical fiber cable in accordance with another embodiment of the present disclosure.

The optical fiber cable is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features. Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

### The following brief definition of terms shall apply throughout the present disclosure:

Term "optical fiber" as used herein refers to a light guide that provides high-speed data transmission. The optical fiber has one or more glass core regions and one or more glass cladding regions. The light moving through the glass core regions of the optical fiber relies upon the principle of total internal reflection, where the glass core regions have a higher refractive index (n1) than the refractive index (n2) of the glass cladding region of the optical fiber.

Term "optical fiber cable" as used herein refers to a cable that encloses a plurality of optical fibers.

Term "intermittently bonded ribbon (IBR)" as used herein refers to an optical fiber ribbon having a plurality of optical fibers such that the plurality of optical fibers is intermittently bonded to each other by a plurality of bonded portions that are placed along the length of the plurality of optical fibers. The plurality of bonded portions is separated by a plurality of unbonded portions.

Term "Bending stiffness" as used herein refers to a resistance of a member against bending deformation.

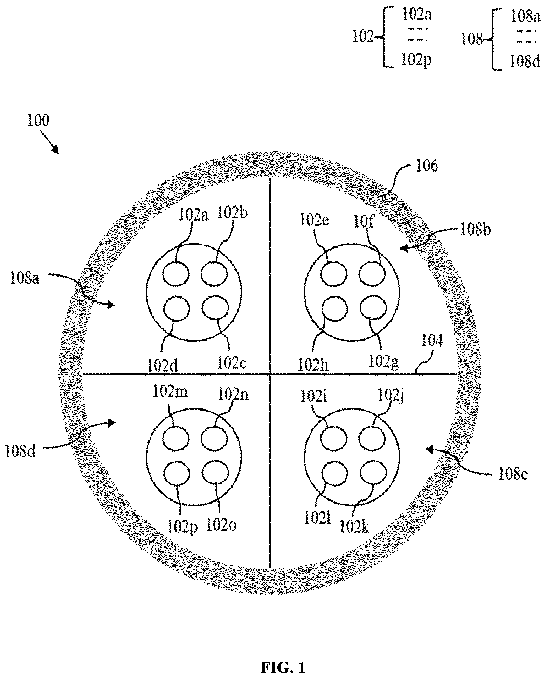

Fig. 1 is a pictorial snapshot illustrating a cross sectional view of an optical fiber cable in accordance with an embodiment of the present disclosure. In particular, the optical fiber cable 100 may have at least one property but not limited to water absorption property, fire-retardant property. Moreover, the optical fiber cable 100 may have a plurality of optical fibers 102 of which first through sixteenth optical fibers 102a-102p are shown, a deformable skeleton structure 104, and a sheath 106. Further, the sheath 106 may surround the plurality of optical fibers 102 (*i.e.,* the first through sixteenth optical fibers 102a-102p) and the deformable skeleton structure 104. In various other aspects, the optical fiber cable 100 can have any number of optical fibers *i.e.,* the plurality of optical fibers 102 may have any number of optical fibers, without deviating from the scope of the present disclosure.

In accordance with an embodiment of the present invention, the plurality of optical fibers 102 may be, but not limited to, a single mode optical fiber, a multimode optical fiber, a single core optical fiber, a multicore optical fiber, and the like.

In accordance with an embodiment of the present invention, the plurality of optical fibers 102 may be in the form of, but not limited to, loose fibers, a ribbon stack, a ribbon bundle, an intermittently bonded ribbon (IBR) bundle, tight buffered fibers, and the like.

Particularly, the plurality of optical fibers 102 in one or more slots of the plurality of slots 108 may be bound by a binder such as, but not limited to, a binder yarn (*i.e.,* made up of, but not limited to, polyester, aramid, and the like), a binder tape (*i.e.,* made up of Polypropylene (PP) material), a Water Swellable Yarn (WSY), a Water Blocking Tape (WBT), a fire-retardant tape, and the like. Aspects of the present disclosure are intended to have and/or otherwise cover any type of the binder, without deviating from the scope of the present disclosure.

In alternative aspects of the present disclosure, the plurality of optical fibers 102 in the one or more slots of the plurality of slots 108 may be enclosed by a plurality of loose tubes (not shown).

The sheath 106 and the deformable skeleton structure 104 may form a plurality of slots 108 of which first through fourth slots 108a-108d. In particular, one or more optical fibers of the plurality of optical fibers 102 may be positioned inside the one or more slots of the plurality of slots 108.

In an exemplary example, the first through fourth optical fibers 102a-102d may be positioned inside the first slot 108a. Similarly, the fifth through eighth optical fibers 102e-102h may be positioned inside the second slot 108b. And, the ninth through twelfth optical fibers 102i-102l may be positioned inside the third slot 108c. Further, the thirteenth through sixteenth optical fibers 102m-102p may be positioned inside the fourth slot 108d.

In accordance with an embodiment of the present invention, the plurality of slots 108 may have 3 slots to 10 slots. It will be apparent to a person skilled in the art that the optical fiber cable 100 is shown to have four slots (*i.e.,* the plurality of slots 108 has the first through fourth slots 108a-108d) to make the illustrations concise and clear and should not be considered as a limitation of the present disclosure. In alternative aspects, the optical fiber cable 100 can have any number of slots *i.e.,* the plurality of slots 108 that are formed by the sheath 106 and the deformable skeleton structure 104 may have any number of slots, without deviating from the scope of the present disclosure.

In accordance with an embodiment of the present invention, the deformable skeleton structure 104 may be made up of, but not limited to, a Water Blocking Tape (WBT), a mica tape, a non-woven fabric, and the like.

In one embodiment of present invention, the deformable skeleton structure 104 may further have at least one of, a water swellable material and a fire-retardant material. In alternative aspects of the present disclosure, the deformable skeleton structure 104 may have both, a water swellable material and a fire-retardant material. Further, the deformable skeleton structure 104 may be made up of but not limited to a non-woven fabric with a water swellable material or a non-woven fabric with a fire-retardant material. Particularly, the water swellable material and the fire-retardant material in the deformable skeleton structure 104 may facilitate in uniform distribution of water blockage inside the optical fiber cable 100 and uniform distribution of fire retardancy inside the optical fiber cable 100, respectively.

Further, each slot of the plurality of slots 108 may have one or more water swellable yarns (WSYs) along with the one or more optical fibers of the plurality of optical fibers 102. In an exemplary example, the first slot 108a may have one or more WSYs along with the first through fourth optical fibers 102a-102d. Similarly, the second slot 108b may have one or more WSYs along with the fifth through eighth optical fibers 102e-102h. And, the third slot 108c may have one or more WSYs along with the ninth through twelfth optical fibers 102i-102l. Further, the fourth slot 108d may have one or more WSYs along with the thirteenth through sixteenth optical fibers 102m-102p. In particular, one or more WSYs in each slot of the plurality of slots 108 (*i.e.,* the first through fourth slots 108a-108d) may facilitate in uniform distribution of water blockage inside the optical fiber cable 100.

In accordance with an embodiment of the present invention, the non-woven fabric of deformable skeleton structure 104 may have a thickness that may be in a range of 0.1 millimetre (mm) to 0.5 mm. Particularly, the deformable skeleton structure 104 with the thickness in the range of 0.1 mm to 0.5 mm may facilitate efficient manufacture and handling of the optical fiber cable 100. Moreover, when the thickness of the deformable skeleton structure 104 is less than or equal to 0.5 mm, the deformable skeleton structure 104 occupies less space inside the optical fiber cable 100, thus increasing packaging efficiency of the optical fiber cable 100. Furthermore, when the thickness of the deformable skeleton structure 104 is greater than or equal to 0.1, the deformable skeleton structure 104 efficiently incorporates water absorption and fire-retardant properties.

In accordance with an embodiment of the present invention, the deformable skeleton structure 104 may have a bending stiffness of less than 50 Millinewton Meter (mNm). Particularly, the deformable skeleton structure 104 with the bending stiffness of less than 50 mNm may result in a less rigid structure that may facilitate efficient packaging of one or more optical fiber elements inside the optical fiber cable 100.

In accordance with an embodiment of the present invention, the deformable skeleton structure 104, when exposed to water, may have a swelling height of greater than 5 mm. Particularly, the deformable skeleton structure 104 with the swelling height of greater than 5 mm on exposure with water may facilitate enough water absorption such that ingression the optical fiber cable 100 is substantially blocked.

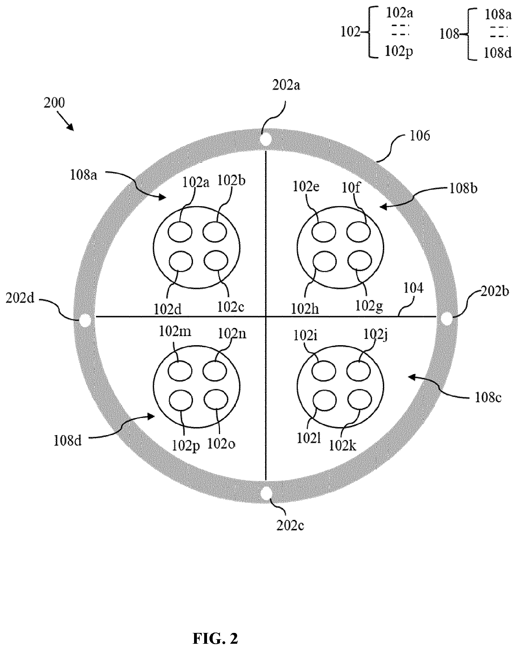

Fig. 2 is a pictorial snapshot illustrating a cross sectional view of an optical fiber cable in accordance with an embodiment of the present disclosure.The optical fiber cable 200 may be substantially similar to the optical fiber cable 100 of FIG. 1.The optical fiber cable 200 has one or more strength members 202, the plurality of optical fibers 102 (*i.e.,* the first through sixteenth optical fibers 102a-102p), the deformable skeleton structure 104, the sheath 106, and the one or more strength members 202 of which first through fourth strength members 202a-202d are shown. In particular, the sheath 106 and the deformable skeleton structure 104 may form the plurality of slots 108 (*i.e.,* the first through fourth slots 108a-108d). Moreover, the one or more strength members 200 (i.e.the first through fourth strength members 202a-202d) may be embedded in the sheath 106. Further, the first through fourth strength members 202a-202d may provide strength to the optical fiber cable 200 that may be required during the installation process. Furthermore, the first through fourth strength members 202a-202d may support the majority of structural strength of the optical fiber cable 200 and may facilitate to enhance a tensile strength of the optical fiber cable 200 which is highly needed during the installation process. It will be apparent to a person skilled in the art that the optical fiber cable 200 is shown to have four strength members (*i.e.,* the one or more strength members 202 has the first through strength members 202a-202d) to make the illustrations concise and clear and should not be considered as a limitation of the present disclosure. In various other aspects, the optical fiber cable 100 can have any number of strength members *i.e.,* the one or more strength members 202 may have any number of strength members, without deviating from the scope of the present disclosure.

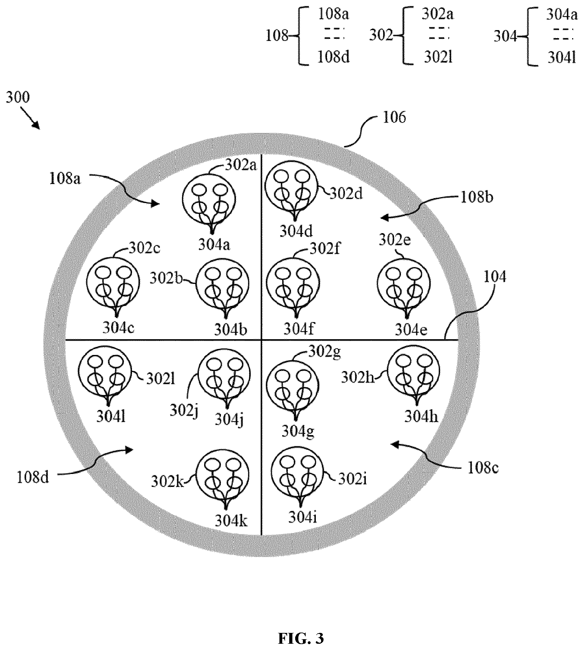

Fig. 3 is a pictorial snapshot illustrating a cross sectional view of an optical fiber cable in accordance with another embodiment of the present disclosure. The optical fiber cable 300 may be substantially similar to the optical fiber cable 100 of Fig. 1. The optical fiber cable 300 has the plurality of optical fibers 102 in the form of one or more bunches 302 of which first through twelfth bunches 302a-302l are shown. In particular, each bunch of the one or more bunches 302 may have a plurality of optical fiber ribbons 304. Moreover, the first through twelfth bunches 302a-302l may have the plurality of optical fiber ribbons 304 *i.e.,* first through twelfth plurality of optical fiber ribbons 304a-304l, respectively. Further, the plurality of optical fiber ribbons 304 (first through twelfth plurality of optical fiber ribbons 304a-304l) may be intermittently bonded ribbon (IBRs).

Further, the deformable skeleton structure 104 and the sheath 106 may form the plurality of slots 108 (*i.e.,* the first through fourth slots 108a-108d). As illustrated, the first through twelfth bunches 302a-302l may be positioned in the first through fourth slots 108a-108d. For example, the first through third bunches 302a-302c may be positioned inside the first slot 108a. And, the fourth through sixth bunches 302d-302f may be positioned inside the second slot 108b. Further, the seventh through ninth bunches 302g-302i may be positioned inside the third slot 108c. Furthemore, the tenth through twelfth bunches 302j-302l may be positioned inside the fourth slot 108d. Although FIG. 3 illustrates that the one or more bunches 302 includes twelve bunches (*i.e.*, the first through twelfth bunches 302a-302l), it will be apparent to a person skilled in the art that the scope of the present disclosure is not limited to it. In various other aspects, the one or more bunches 302 may include any number of bunches, without deviating from the scope of the present disclosure.

In accordance with an embodiment of the present invention, the plurality of optical fiber ribbons 304 in one or more slots of the plurality of slots 108 may be bound by a binder such as, but not limited to, a binder yarn (*i.e.,* made up of, but not limited to, polyester, aramid, and the like), a binder tape (*i.e.,* made up of Polypropylene (PP) material), a Water Swellable Yarn (WSY), a Water Blocking Tape (WBT), a fire-retardant tape, and the like. Aspects of the present disclosure are intended to have and/or otherwise cover any type of the binder, without deviating from the scope of the present disclosure.

In accordance with an embodiment of the present invention, the plurality of optical fiber ribbons 304 (*i.e.,* the first through twelfth plurality of optical fiber ribbons 304a-304l) in the one or more slots of the plurality of slots 108 may be enclosed by a plurality of tubes (not shown).

In accordance with an embodiment of the present invention, the optical fiber cable 300 may have at least one of, a water absorption property or a fire-retardant property.

In some aspects of the present disclosure, each slot of the plurality of slots 108 may have a different color. In other words, the first through fourth slots 108a-108d may have a different color. Particularly, the different colors of each slot of the plurality of slots 108 may facilitate in identification of the one or more bunches 302 (*i.e.,* the first through twelfth bunches 302a-302l).

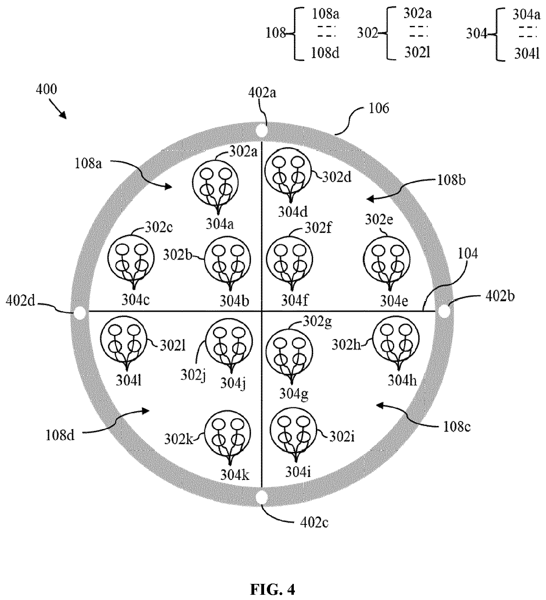

Fig.4 is a pictorial snapshot illustrating a cross sectional view of an optical fiber cable in accordance with another embodiment of the present disclosure. The optical fiber cable 400 may be substantially similar to the optical fiber cable 300 of FIG. 3. The optical fiber cable 400 has one or more strength members 402, the plurality of optical fibers 102 in the form of the one or more bunches 302 (*i.e.,* the first through twelfth bunches 302a-302l). Each bunch of the one or more bunches 302 may have the plurality of optical fiber ribbons 304. In particular, the first through twelfth bunches 302a-302l may have the plurality of optical fiber ribbons 304 *i.e.,* the first through twelfth plurality of optical fiber ribbons 304a-304l, respectively. Further, the optical fiber cable 400 may have the deformable skeleton structure 104, the sheath 106, and the one or more strength members 402 of which first through fourth strength members 402a-402d are shown.

The sheath 106 and the deformable skeleton structure 104 may form the plurality of slots 108 (*i*.*e.,* the first through fourth slots 108a-108d). In particular, the one or more strength members 402 (first through fourth strength members 402a-402d ) may be embedded in the sheath 106. Further, the first through fourth strength members 402a-402d may facilitate the optical fiber cable 400 that is required during the installation process. Furthermore, the first through fourth strength members 402a-402d may support the majority of structural strength of the optical fiber cable 400 and may facilitate to enhance a tensile strength of the optical fiber cable 400 which is highly needed during the installation process. It will be apparent to a person skilled in the art that the optical fiber cable 400 is shown to have four strength members (*i.e.,* the one or more strength members 402 has the first through strength members 402a-402d) to make the illustrations concise and clear and should not be considered as a limitation of the present disclosure. In various other aspects, the optical fiber cable 400 can have any number of strength members *i.e.,* the one or more strength members 402 may have any number of strength members, without deviating from the scope of the present disclosure.

In accordance with an embodiment of the present invention, the optical fiber cable (100, 200, 300, 400) may comprise, a deformable skeleton structure (104), where the deformable skeleton structure (104) when exposed to water, has a swelling height of greater than 5 mm, a sheath (106) and a plurality of optical fibers (102) housed between the regions between the deformable skeleton structure (104) and the sheath (106). In particular, the deformable skeleton structure (104) is made up of a non-woven fabric. Moreover, the deformable skeleton structure (104) has a bending stiffness of less than 50 Millinewton Meter (mNm). Further, the sheath (106) and the deformable skeleton structure (104) forms a plurality of slots (108), where one or more optical fibers of the plurality of optical fibers (102) are positioned inside one or more slots of the plurality of slots (108). Subsequently, each slot of the plurality of slots (108) has a different colour.

In accordance with an embodiment of the present invention, the plurality of optical fiber ribbons (304) may have one or more ribbons. In particular, the plurality of optical fiber ribbons (304) in the one or more slots of the plurality of slots (108) are bound by one of, a binder yarn, a binder tape, a WSY, a WBT, a Fire-retardant tape.

The proposed optical fiber cable incorporates a deformable skeleton structure, ensuring uniform distribution of water absorption and fire-retardancy components. The deformable skeleton structure, made of a non-woven fabric, is equipped with water swellable and fire-retardant materials, ensuring even protection

The invention provides increased flexibility with a deformable skeleton structure, mitigating issues related to bending stiffness. Further, the placement of optical fibers in slots within the deformable structure provides fiber bundle identification feature while maintaining uniform protective features. The deformable skeleton structure made of a non-woven fabric, ensuring uniform distribution of water swellable and fire-retardant materials. The plurality of slots within the deformable structure accommodates optical fibers, preventing issues associated with uneven distribution.

Further, the deformable skeleton structure, with its non-woven fabric composition and embedded protective elements, works synergistically to provide a comprehensive and uniform defense against water penetration and fire hazards.

For instance, in scenarios where water penetration is a concern, the deformable skeleton structure swells uniformly when exposed to water, blocks water ingression and maintaining cable integrity. In fire-prone environments, the evenly distributed fire-retardant components enhance overall safety.

The invention encompasses a wide range of optical fiber cable designs featuring deformable skeleton structures with uniform distribution of protective elements. This generalization extends to various applications requiring consistent water-blocking and fire-retardant properties.

Advantageously, the optical fiber cables 100, 200, 300, and 400 has the deformable skeleton structure 104 forming the plurality of slots 108 for achieving uniform distribution of the water absorption and/or the fire retardancy properties for the components inside the optical fiber cable 100, 200, 300, 400. Further, the deformable skeleton structure 104 itself exhibits one or more properties such as, but not limited to, the water absorption, the fire retardancy, and the like. Furthermore, each slot of the plurality of slots 108 of the optical fiber cable 300, 400 may have a different color to facilitate in identification of the one or more bunches 302 (*i.e.,* the first through twelfth bunches 302a-302l).

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. An optical fiber cable (100, 200, 300, 400) **characterized in that**:
a plurality of optical fibers (102);
a deformable skeleton structure (104); and
a sheath (106) that surrounds the plurality of optical fibers (102) and the deformable skeleton structure (104) such that the sheath (106) and the deformable skeleton structure (104) forms a plurality of slots (108),
wherein one or more optical fibers of the plurality of optical fibers (102) are positioned inside one or more slots of the plurality of slots (108).

2. The optical fiber cable (100, 200, 300, 400) of claim 1, wherein the deformable skeleton structure (104) is made up of a non-woven fabric.

3. The optical fiber cable (100, 200, 300, 400) of claim 1, wherein the deformable skeleton structure (104) further comprising one of, water swellable material, fire retardant material, or a combination thereof.

4. The optical fiber cable (100, 200, 300, 400) of claim 1, wherein each slot of the plurality of slots (104) comprising one or more water swellable yarns (WSYs) along with the one or more optical fibers of the plurality of optical fiber (102).

5. The optical fiber cable (100, 200, 300, 400) of claim 1, wherein the deformable skeleton structure (104) has a bending stiffness of less than 50 Millinewton Meter (mNm).

6. The optical fiber cable (100, 200, 300, 400) of claim 2, wherein the non-woven fabric has a thickness that is in a range of 0.1 millimetre (mm) to 0.5 (mm).

7. The optical fiber cable (100, 200, 300, 400) of claim 1, wherein the plurality of slots (108) comprising 3 to 10 slots.

8. The optical fiber cable (100, 200, 300, 400) of claim 1, wherein the plurality of optical fibers (102) are in the form of one or more bunches (302) of a plurality of optical fiber ribbons (304).

9. The optical fiber cable (100, 200, 300, 400) of claim 7, wherein the plurality of optical fiber ribbons (304) are intermittently bonded ribbon (IBRs).

10. The optical fiber cable (100, 200, 300, 400) of claim 7, wherein the plurality of optical fiber ribbons (304) in the one or more slots of the plurality of slots (108) are bound by one of, a binder yarn, a binder tape, a WSY, a WBT, a Fire-retardant tape.

11. The optical fiber cable (100, 200, 300, 400) of claim 1, wherein each slot of the plurality of slots (108) has a different colour.

12. The optical fiber cable (100, 200, 300, 400) of claim 1, wherein the deformable skeleton structure (104), when exposed to water, has a swelling height of greater than 5 mm.

13. The optical fiber cable (100, 200, 300, 400) of claim 1, wherein the optical fiber cable( 100,200,300,400) further comprising one or more strength members (202, 402) embedded in the sheath (106).

14. An optical fiber cable (100, 200, 300, 400) **characterized in that**:
a deformable skeleton structure (104), where the deformable skeleton structure (104) when exposed to water, has a swelling height of greater than 5 mm;
a sheath (106); and
a plurality of optical fibers (102) housed between the regions between the deformable skeleton structure (104) and the sheath (106).

15. The optical fiber cable (100, 200, 300, 400) of claim 14, wherein the deformable skeleton structure (104) is made up of a non-woven fabric.
